# EUROPÄISCHE PATENTSCHRIFT

(11) **EP 1 900 593 B1**
(45) Veröffentlichungstag und Bekanntmachung des Hinweises auf die Patenterteilung: **13.10.2010**
(21) Anmeldenummer: 07017543.5
(22) Anmeldetag: 07.09.2007
(51) Int. Cl.: B61G 11/06, B61D 15/06, F16F 7/12

(54) **Schienenfahrzeug mit Crashausrüstung**
Rail vehicle with crash equipment
Véhicule sur rails doté d'un équipement anti-collision

(30) Priorität: 15.09.2006 DE 202006014402 U
(43) Veröffentlichungstag der Anmeldung: 19.03.2008
(73) Patentinhaber: FTD Fahrzeugtechnik Dessau GmbH CTF, 06844 Dessau-Roßlau (DE)
(72) Erfinder: Hönl, Christoph, 39264 Bias (DE)
(74) Vertreter: Tragsdorf, Bodo

(56) Entgegenhaltungen:
- EP-A- 0 826 569
- EP-A- 1 247 716
- EP-A- 1 582 428
- DE-A1- 19 809 489
- FR-A- 2 775 240

## Beschreibung

Die Erfindung bezieht sich auf ein Schienenfahrzeug, insbesondere für den Eisenbahnverkehr, mit einer Crashausrüstung zum Schutz der Fahrerkabine einschließlich Fahrgastabteil bei einem Aufprall oder einer frontalen Kollision mit einem Gegenstand, gemäss den Merkmalen des Oberbegriffes des unabhängigen Anspruches 1.

Wagenkästen für Schienenfahrzeuge sind als Metallkonstruktion ausgeführt und müssen bestimmten sicherheitstechnischen Anforderungen genügen, um im Falle einer Kollision mit einem anderen Fahrzeug oder Gegenstand die Unversehrtheit, insbesondere von in der Fahrerkabine befindlichen Personen, zu gewährleisten.

Bekannt sind besondere Ausbildungen der Rohbaustruktur des Wagenkastens mit plastisch deformierbaren Zonen als Energieabsorber. Am vorderen und/oder hinteren Ende des Schienenfahrzeuges können zusätzlich energieabsorbierende Elemente angeordnet sein. Aus der DE 697 07 597 T2 ist ein Schienenfahrzeug bekannt, das mit mehreren energieabsorbierenden Elementen ausgerüstet ist, einem Kopplungselement und zwei deformierbaren Trägern, die an ihren Enden verbolzt sind und aus einer Anordnung von deformierbaren Blechen bestehen. Die Träger sind mit ihrer Vorderseite an dem nicht verformbaren Ende des Fahrzeuggehäuses befestigt und stehen mit dem Kopplungselement in Berührungskontakt. Zusätzlich ist das Fahrzeuggehäuse noch mit Elementen zur plastischen Deformation ausgerüstet.

Von Nachteil ist, dass die energieabsorbierenden Elemente nach dem Verbrauch der Verformungswege vollständig ausgetauscht werden müssen und ein erhöhter Reparatur- und Montageaufwand erforderlich ist.

FR-A-2 775 240 stellt den nächstliegenden Stand der Technik der entsprechend den Merkmalen des Oberbegriffs von Anspruch 1.

Der Erfindung liegt die Aufgabe zugrunde, ein Schienenfahrzeug mit einer Crashausrüstung zu schaffen, wobei sich die Crashausrüstung durch eine verbesserte Absorptionswirkung auszeichnet und bei einem Frontalaufprall eine Unversehrtheit des in der Fahrerkabine befindlichen Fahrers gewährleistet.

Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 12.

Als energieabsorbierende Elemente sind ein Puffer und eine Crashbox vorgesehen, die zeitlich verzögert wirksam werden. Die Crashbox bzw. das Crashmodul besitzt zwei Flanschplatten, mit der einen Flanschplatte ist diese mit dem Wagenkasten fest verbunden und an der anderen frontseitigen Flanschplatte ist der Puffer befestigt, beispielsweise mittels Schraubverbindungen. Dieser besteht aus einem Stempel, einem mit diesem verbundenen reversiblen Hubelement und einem irreversiblen energieabsorbierenden Hubelement, wobei das reversible Hubelement mit dem irreversiblen Hubelement in Berührungskontakt steht. Die Crashbox ist als doppelwandiges gehäuseartiges Blechbauteil ausgebildet, deren innere Wandung und äußere Wandung an örtlich definierten Stellen Bauteilschwächungen und in Längsrichtung verlaufende Abkantungen aufweisen, derart, dass sich die Crashbox während der Energieaufnahme durch Falt- und Stauchungsvorgänge verformt. Nach erfolgter Energieaufnahme bildet die Crashbox zusammen mit dem Puffer eine nahezu starre Einheit, die noch vorhandene Längskräfte in den Wagenkasten einleitet. Die innere Wandung der Crashbox dient gleichzeitig als Führung und Aufnahme für das irreversible Hubelement des Puffers.

Die Wirkrichtung im Falle eines Crash ist die Fahrtrichtung. Kommt es zu einem Frontalaufprall so wird zuerst das reversible Hubelement und anschließend das irreversible, energieabsorbierende Hubelement des Puffers beansprucht, wobei Letzteres gestaucht wird und als Energieabsorber wirkt. Sind diese beiden Wege aufgebraucht, so übernimmt die Crashbox die weitere Energieaufnahme. Nach dem Überwinden der Auslösekraft absorbiert die Crashbox durch Falt- und Stauchungsprozesse (Verformungsarbeit) eine bestimmte Energie. Eine gegebenenfalls noch vorhandene Restenergie muss vom Wagenkasten aufgenommen werden.

Das gestaffelte Eingreifen der einzelnen Teilschritte Puffer-Crashbox-Wagenkasten wird durch unterschiedliche Kraftniveaus realisiert. Das Kraftniveau steigt von Teilschritt zu Teilschritt an und ist auch im Bezug auf das auslösende Kraftniveau, das oft als Kraftspitze auftritt, aufeinander abgestimmt. Für die Crashbox bedeutet das, dass deren auslösende Kraftspitze auf das Kraftniveau des Puffers und auf die Längssteifigkeit des Wagenkastens abzustimmen ist.

Vorzugsweise ist die äußere Wandung der Crashbox, deren Mantelfläche, als Pyramidenstumpf mit einer rechteckigen Grundfläche ausgebildet, wobei die Crashbox so angeordnet ist, dass die kleinere Fläche des Pyramidenstumpfes in Fahrtrichtung zeigt. Von Vorteil für eine hohe Energieaufnahme ist, wenn diese an den vertikalen Seiten nach außen zeigende Abkantungen und/oder an den horizontalen Seiten nach innen zeigende Abkantungen besitzt.

Die äußere Wandung bzw. Mantelfläche der Crashbox kann auch als Kegelstumpf ausgebildet sein oder aus zwei, mit ihren kleineren Flächen stirnseitig aneinander angrenzenden Kegel- oder Pyramidenstümpfen bestehen, die miteinander in Form einer "Sanduhr" verbunden sind. Die Mantelflächen können auch in Längsrichtung verlaufende Abkantungen aufweisen, die nach innen und/oder außen zeigen.

Über einen oder mehrere Parameter, wie Material, Materialdicke, Sollbruchstellen, Aussparungen oder Triggerungen kann das Deformationsverhalten der Crashbox eingestellt werden. Durch Verringerungen der Materialdicke und/oder Freischnitte lassen sich gezielt Bauteilschwächungen erzielen, sowohl in der äußeren als auch inneren Wandung der Crashbox. Die Hubelemente des Puffers und die innere Wandung der Crashbox sind vorzugsweise rohrförmig ausgebildet.

Als Crashausrüstung für das Schienenfahrzeug ist seitlich, neben der Fahrzeugkupplung, z.B. an einem unterhalb des Fahrzeugbodens befindlichem, vorzugsweise nicht verformbaren, Querträger jeweils eine energieabsorbierende Crashbox mit Puffer befestigt.

Die Energieaufnahme der Crashboxen erfolgt zeitlich verzögert nach der Kupplung und unabhängig von dieser. Im Kollisionsfall wird zuerst die Fahrzeugkupplung, die in der Regel mit einem separaten Energieabsorber ausgerüstet ist, in Anspruch genommen. Diese nimmt bereits einen Teil der Aufprallenergie auf. Wenn die Energieaufnahmefähigkeit der Kupplung verbraucht ist, gelangen die Puffer der beiden Crashboxen in Kontakt mit dem Hindernis bzw. Kollisionsgegenstand. Durch die unmittelbar vor der Rohbaustruktur des Fahrzeuges angeordneten Crashboxen besteht die Möglichkeit, das während der einzelnen Kollisionsszenarien entstehende Kraftniveau im Gesamtfahrzeug gezielt zu steuern, in Abhängigkeit von der zulässigen Höchstgeschwindigkeit des Fahrzeuges. Die Crashboxen können sowohl auf den in der Praxis auftretenden Kollisionsfall als auch in ihrer Energieaufnahme als unterschiedliche Ausführungsvarianten konstruktiv ausgelegt werden. Hierzu bestehen verschiedene Möglichkeiten, insbesondere im Einsatz von in ihrer Dicke unterschiedlichen Materialien sowie der geometrischen Gestaltung. Außer der Veränderung der Blechdicken und des Materials kann die Energieaufnahme der Crashbox auch durch eine zusätzliche Verstärkung der Triggerung (gezieltes Einbringen von Kerbstellen), eine Veränderung der Querschnittsmaße und mittels in Längsrichtung verlaufender Abkantungen beeinflusst werden. Eine Erhöhung der Energieaufnahme kann beispielsweise durch den Einsatz eines energieabsorbierenden Schaumes, insbesondere auf Kunststoffbasis, erreicht werden, der in den Hohlraum zwischen den Wandungen der Crashbox eingebracht wird.

Mittels vorgenannter Maßnahmen zur unterschiedlichen Ausgestaltung der Crashboxen ist es möglich, die Kraft-Weg-Linie auf die jeweiligen Anforderungen und auf das jeweilige Fahrzeug abzustimmen.

Die Crashbox ist ein wirksames Mittel zur weiteren Schadensbegrenzung im Kollisionsfall. Von Vorteil ist deren einfache und kostengünstige Herstellung sowie einfache Austauschbarkeit nach einem Crash. Die vorgeschlagene Crashausrüstung ermöglicht eine hohe Energieaufnahme, so dass in bestimmten Anwendungsfällen auf besondere, aufwendige plastisch deformierbare Zonen innerhalb der Rohbaustruktur des Wagenkastens verzichtet werden kann. In diesem Fall sind die Crashboxen in ihrer Energieaufnahme so ausgelegt, dass diese bei einer Kollision die anfallende Restenergie vollständig absorbieren oder noch vorhandene Restenergie in den Wagenkasten einleiten, sodass die Gefahr einer Deformation der Fahrerkabine erheblich reduziert wird und zumindest jedoch die Unversertheit des Fahrers gewährleistet wird. Zumindest ist dies bei Schienenfahrzeugen möglich, die für den mittleren Geschwindigkeitsbereich bestimmt sind und vorwiegend im Regionalverkehr zum Einsatz kommen. Bei Schienenfahrzeugen, die im höheren Geschwindigkeitsbereich betrieben werden, kann es erforderlich sein, die Fahrerkabine durch zusätzlich deformierbare Zonen bzw. Abschnitte im Bereich der vorderen Wagenstruktur zu schützen.

Die Crashausrüstung kann an einem oder an beiden Enden des Schienenfahrzeuges angeordnet sein. Bei Schienenfahrzeugen mit mehreren kuppelbaren Wageneinheiten können die Crashboxen-Paare in der Reihenfolge der Wagen, in ihrer Energieaufnahme unterschiedlich abgestimmt werden.

Die Crashausrüstung kann erforderlichenfalls noch durch einen sogenannten Bahnräumer erweitert werden, der nur bei Kollisionen mit kleineren Hindernissen, wie z.B. Baumstämme, PKW's, zum Einsatz kommt. Der vorgeschlagene Bahnräumer besteht im Wesentlichen aus drei Teilen, dem Schiebeschild, auf das die auf den Schienen liegenden Hindernisse aufprallen, dem Energieabsorber und der Haltekonsole. Diese drei Bauteile sind unter dem Untergestell des Wagenkastens wie folgt montiert. Die Haltekonsole ist mit dem Untergestell verschweißt. An die Haltekonsole wird der Energieabsorber geschraubt und an diesen das Schiebeschild. Bei einer Kollision überträgt das Schiebeschild die Kollisionslasten auf den Energieabsorber der dann zum Einsatz kommen kann. Die Haltekonsole bildet das Gegenlager. Nach der Kollision kann der Energieabsorber und gegebenenfalls auch das Schiebeschild ausgetauscht werden, die Haltekonsole bleibt bei "normalen Kollisionen" unversehrt. Als Energieabsorber werden vorzugsweise Crashboxen gemäß den vorstehend erläuterten Ausführungen eingesetzt.

Die Erfindung soll nachstehend an einem Ausführungsbeispiel näher erläutert werden. In der zugehörigen Zeichnung zeigen:
- Fig. 1: den vorderen Abschnitt des Wagenkastens mit montierter Crashausrüstung in perspektivischer Darstellung,
- Fig. 2: den vorderen Abschnitt des Wagenkastens mit Crashausrüstung als Explosionsdarstellung,
- Fig. 3: den vorderen Abschnitt des Wagenkastens mit Crashausrüstung, als um 180° gedrehte Ansicht, von unten,
- Fig. 4: eine Ausführungsvariante der Crashbox mit Puffer, als Explosionsdarstellung und im zusammengebauten Zustand,
- Fig. 5: eine Ausführungsvariante eines Bahnräumers in vereinfachter Darstellung als Seitenansicht und
- Fig. 6: die Crashbox als Einzelteil, in perspektivischer Darstellung.

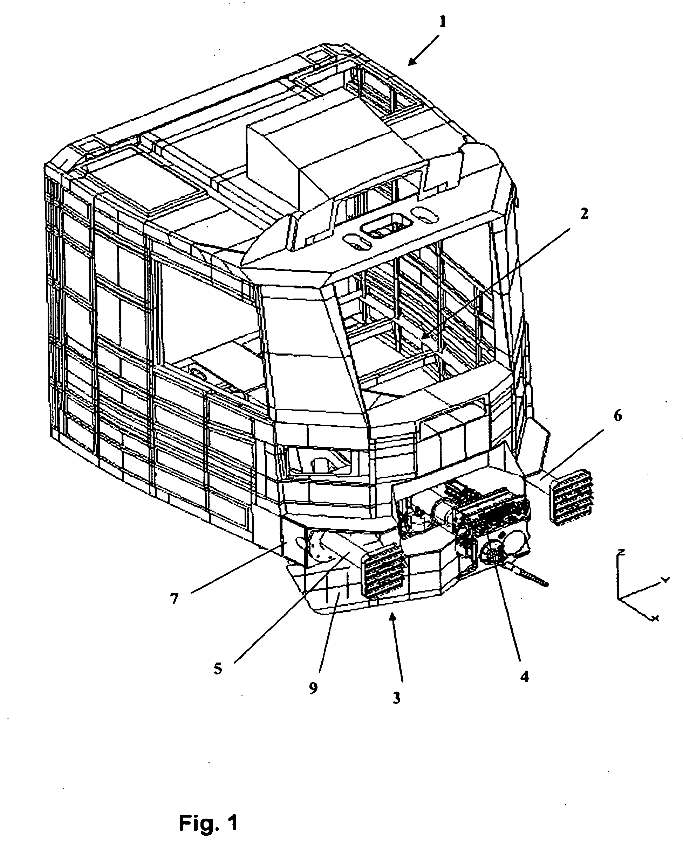

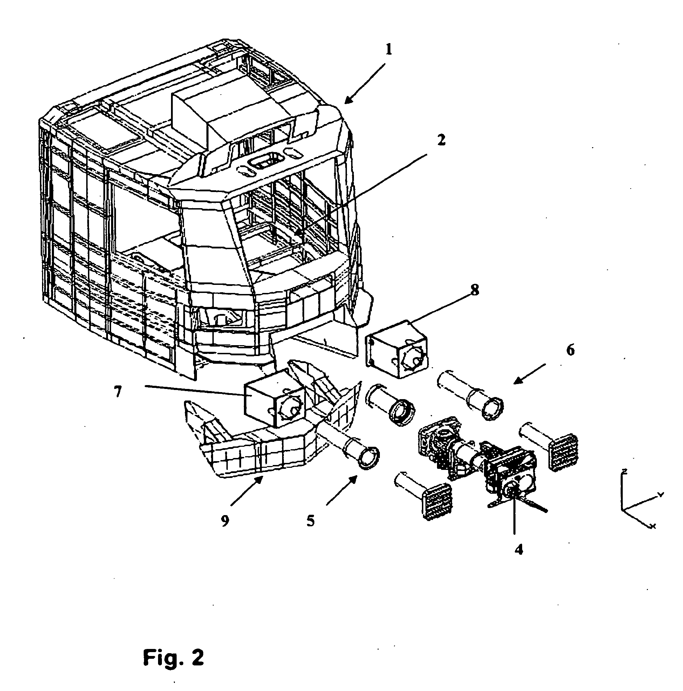

In den Figuren 1 und 2 ist der vordere Abschnitt des Wagenkastens 1 eines Schienenfahrzeuges mit Fahrerkabine 2 als Rohbau gezeigt. Am vorderen, unteren Teilabschnitt des Wagenkasten 1 ist eine Crashausrüstung 3 angeordnet. Diese besteht aus einer mittig angeordneten Fahrzeugkupplung 4 mit Energieabsorber, zwei seitlich neben der Kupplung 4 montierten Puffern 5 und 6 mit jeweils einer Crashbox 7, 8 sowie einem Bahnräumer 9. Die Rohbaukonstruktion des Wagenkasten 1 besitzt keine plastisch deformierbaren Zonen oder Abschnitte zum Schutz der Fahrerkabine 2 bei einer Kollision mit einem Gegenstand.

Dieser Schutz wird zum großen Teil von der Crashausrüstung 3 übernommen.

Bei besonders starken Kollisionen wird der Wagenkasten, beziehungsweise der Teil des Führerstandes zur Energeiabsorption genutzt. Die Fahrerkabine ist aber so ausgelegt, dass sie bei den geforderten Kollisionsszenarien den festgelegten Überlebensraum für den Fahrer gewährleistet.

Bei der energieabsorbierenden Kupplung 4 handelt es sich um ein handelsübliches Bauteil.

Wesentliche Bauteile der vorliegenden Erfindung sind die beiden Puffer 5 und 6 mit den jeweils zugehörigen Crashboxen 7 und 8. Sowohl die beiden Puffer 5 und 6 als auch die beiden Crashboxen 7 und 8 sind identisch ausgeführt.

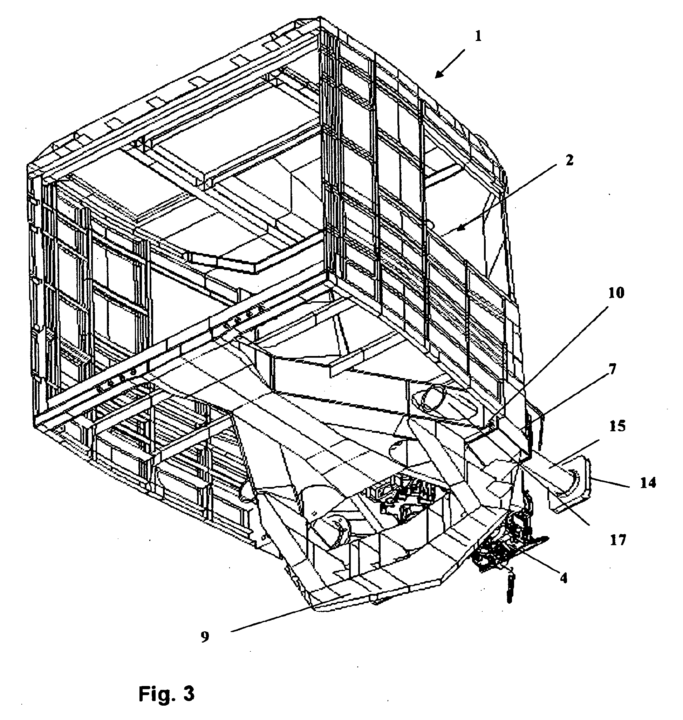

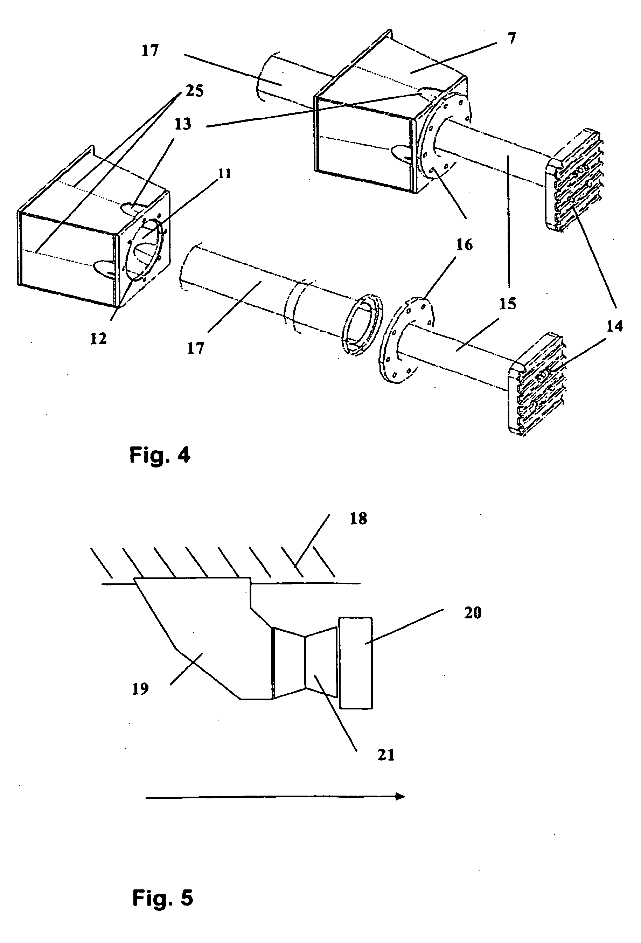

Wie in den Figuren 2 und 4 zu sehen ist, besteht jeder Puffer 5, 6 aus einem Pufferstempel 14, der mit einem Pufferrohr 15 verbunden ist, und einem irreversiblen, energieabsorbierenden rohrförmigem Hubelement 17. Das Pufferrohr 15 wirkt als reversibles Hubelement. Der scheibenförmige Befestigungsflansch 16 des Puffers 5, 6 ist an der Frontseite 12 der Crashbox 7, 8 mittels Schrauben befestigt. Der Befestigungsflansch 16 besitzt an der in Fahrtrichtung entgegengesetzten Seite einen ringförmigen Ansatz zur Aufnahme und Führung des Pufferrohres 15. Das Pufferrohr 15 besitzt an seinem Außenumfang einen in Längsrichtung verlaufenden Führungssteg, der in eine korrespondierende Nut im Befestigungsflansches 16 und ringförmigen Ansatz eingreift, sodass das Pufferrohr 15 mit dem Stempel 14 zwangsgeführt ist. Der ringförmige Ansatz, Führungssteg und Nut sind in der Zeichnung nicht zu sehen. Das rohrförmige Hubelement 17 wirkt als Energieabsorber und sitzt fest auf dem ringförmigen Ansatz des Befestigungsflansches 16. In dem rohrförmigen Hubelement 17 befindet sich eine Feder, durch die der Stempel 14 in seine Ausgangslage gedrückt wird. Die jeweilige Crashbox 7, 8 ist doppelwandig, wobei die innere Wandung 11 als zentrales Führungsrohr zur Aufnahme des rohrförmigen Hubelementes 17ausgebildet ist. Wie im montierten Zustand in Fig. 4 zu sehen ist, überragt das Rohr 17 die Crashbox 7 bzw. 8. In dem Querträger 10, an dem die Crashbox angeschraubt ist, befindet sich eine Öffnung, durch die das Rohr bzw. Hubelement 17 ragt, wie in Figur 3 gezeigt. Im gezeigten Ausführungsbeispiel bestehen die beiden Crashboxen aus einem gehäuseartigen Blechbauteil, das in seiner Geometrie die Form eines Pyramidenstumpfes mit einer rechteckigen Grundfläche aufweist. Die kleinere Fläche 12 bildet die in Fahrtrichtung zeigende Frontseite. Die Crashbox 7, 8 besitzt an der zur Fronseite gegenüberliegenden Seite Befestigungsstellen, z.B. als umlaufender Rand bzw. Flansch 22 mit Bohrungen, zum Anschrauben am Querträger 10 des Untergestells. In den vier Seitenwänden der Crashbox 7, 8 befindet sich jeweils mittig, in unmittelbarer Nähe zur Frontseite 12 eine Aussparung 13. Die Crashbox wurde beispielsweise aus einem 5 mm dicken Blech gefertigt. Über die Blechdicke und die Aussparungen 13 sowie die geometrische Form ist das Deformationsverhalten der Crashbox 7, 8 definiert. Erforderlichenfalls kann der Hohlraum zwischen dem zentralen Führungsrohr 11 und den Seitenwänden 24 noch mit einem energieabsorbierenden Kunststoff ausgeschäumt werden.

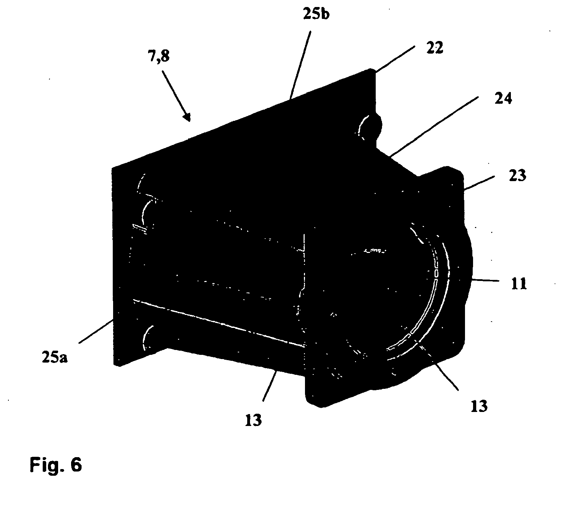

In Figur 6 ist noch eine bevorzugte Ausführungsform einer Crashbox 7, 8 gezeigt.

Diese weist an ihren beiden Stirnseiten jeweils einen Befestigungsflansch 22, 23 auf. Mittels des Befestigungsflansches 22 wird die Crashbox am Wagenkasten angeschraubt und an dem Befestigungsflansch 23 wird der zugehörige Puffer angeschraubt. Die Crashbox dient gleichzeitig als Träger für den Puffer.

Die äußere Mantelfläche der doppelwandigen Crashbox ist in ihrer Geometrie als Pyramidenstumpf mit einer rechteckigen Grundfläche ausgebildet. Die innere Wandung 11 ist rohrförmig gestaltet und dient neben dem Energieverzehr auch zur Aufnahme und Führung des irreversiblen Hubelementes 17. Außerdem können dadurch auch bei großen Querbeanspruchungen (quer zur Wirk- bzw. Fahrtrichtung) einwirkende Kräfte absorbiert werden.

Sowohl die äußere 24 als auch die innere Wandung bzw. Führung 11 sind mit örtlichen Bauteilschwächungen (Trigger) versehen, die bewirken, dass die Crashbox bei einem Fahrzeugcrash unter Bildung von Falt- und Stauchungsvorgängen verformt wird, die eine relativ große Energieaufnahme gewährleisten. Diese werden zum einen durch örtliche Schwächungen der Materialdicke (an definierten Stellen ist ein Teil der Blechdicke abgefräst) und zum anderen durch vollständige Aussparungen 13 im Material (Freischnitte) realisiert. Zusätzlich sind die Seitenwände 24 der Mantelfläche jeweils mittig in Längsrichtung mit einer Abkantung 25a, 25b versehen. Diese zeigen an den vertikalen Seitenwänden nach außen, 25a, (aus dem Körper des Crashbox heraus) und an den horizontalen Seitenwänden nach innen, 25b, (in den Körper der Crashbox hinein). Durch die Richtung dieser Abkantungen 25a, 25b kann somit beeinflusst werden, ob die auftretenden Falten und Beulen nach außen oder nach innen verlaufen. Nach innen gerichtete Abkantungen führen zu einer teleskopartigen Faltenbildung nach außen und umgekehrt.

Die Wirkungsweise des Systems Crashbox-Puffer ist folgende:

Falls das Schienenfahrzeug zusätzlich noch eine energieabsorbierende Fahrzeugkupplung 4 besitzt, so wird bei einem Frontalaufprall zuerst eine bestimmt Energie von dieser aufgenommen. Anschließend wird Puffer 5, 6 beansprucht, wobei das unter Federdruck stehende reversible Hubelement 15 eine bestimmte Energie aufnimmt. Ist dessen Weg aufgebraucht, so wird nachfolgend durch den Kontakt zwischen dem reversiblen Hubelement 15 und dem irreversiblen Hubelement 17 das Hubelement 17 durch Stauchung verformt. Anschließend wirkt die noch vorhandene Energie vom Puffer 5, 6 auf die Crashbox 7, 8 übertragen. Nach Überwinden der Auslösekraft der Crahbox absorbiert diese aufgrund ihrer speziellen konstruktiven Auslegung eine relativ hohe Energie. Dabei wird die Crashbox 7, 8 gezielt durch Falt- und Stauchungsvorgänge verformt, bedingt durch die in dem Führungsrohr 11 (innere Wandung) und der Mantelfläche 24 (äußere Wandung bzw. Seitenwände) eingebrachten Freischnitte 13 sowie dem an bestimmten Stellen vorgenommenen Materialabtrag in der Mantelfläche. Zusätzlich bewirken die mittig angeordneten, nach innen bzw. nach außen gerichteten Abkantungen 25a, 25b an den Seitenwänden 24 eine teleskopartige Faltenbildung. Nach dem Verbrauch der Verformungsenergie bilden die deformierten Bauteile Puffer 5, 6 und Crashbox 7, 8 eine nahezu starre Einheit. Bei einem besonders starken Aufprall kann über die starre Einheit noch vorhandene Restenergie in den Wagenkastenrohbau 1 eingeleitet werden. Die zum Wagenkastenrohbau gehörende Fahrerkabine 2 des Schienenfahrzeuges bleibt somit von den Folgen eines Aufpralls weitestgehend verschont. Bei besonders starken Kollisionen kann es jedoch vorkommen, dass diese zur Energieabsorption mit beansprucht wird und teilweise deformiert wird.

Gemäß den Vorschriften zur Kollisionssicherheit von Schienenfahrzeugen (EN15227) soll der Schutz von Fahrern und Fahrgästen gewährleistet werden. Durch die vorgeschlagenen Maßnahmen (Crashpuffer/Crashmodul) wird die Kollisionsenergie wirksam im Bereich des Führerstandes absorbiert. Je nach auftretender Kollisionsenergie (Geschwindigkeit, Masse und Art des Kollisionsgegenstandes) werden hierfür die einzelnen energieverzehrenden Elemente (Crashpuffer/Crashmodul) und die Führerkabine genutzt. Gemäß der o.g. Vorschrift werden eine Reduktion der negativen Beschleunigung auf 5g bis 7g, eine maximale Deformation des Fahrgastraumes um 1% (Quetschgefahr) und der Schutz des Fahrers durch Bereitstellung eines Überlebensraumes gefordert. Die vorgeschlagene Crahausrüstung wird diesen Forderungen in vollem Umfang gerecht.

Die erfindungsgemäße Crashausrüstung kann noch durch einen Bahnräumer 9 ergänzt werden.

In Fig. 5 ist ein derartiger Bahnräumer 9 für ein Schienenfahrzeug vereinfacht dargestellt. Die Fahrtrichtung ist durch einen Pfeil gekennzeichnet. Der Bahnräumer 9 besteht im Wesentlichen aus einem Schiebeschild 20 auf das auf den Schienen liegende Hindernisse (Baumstämme, PKW's) aufprallen, einem Energieabsorber 21 und zwei parallel beabstandeten Haltekonsolen 19. Die Haltekonsolen 19 sind mit dem Untergestell 18 des Wagenkastens 1 verschweißt. An diese ist der Energieabsorber 21 geschraubt. Dieser besteht, wie in Fig. 5 gezeigt, beispielsweise aus zwei Pyramidenstümpfen, die in Form einer Sanduhr verbunden sind. Die Grundflächen der Pyramidenstümpfe bilden jeweils die Verschraubungsebenen zum Schiebeschild 20 bzw. zur Haltekonsole 19. Das Schiebeschild 20 ist mittels Schraubverbindungen am Energieabsorber 21 befestigt. Bei einer Kollision überträgt das Schiebeschild 20 die Kollisionslasten auf den Energieabsorber 21 der die Energie aufnimmt und gegebenenfalls deformiert wird. Die Haltekonsolen 19 bilden das Gegenlager. Nach der Kollision kann der Energieabsorber 21 und gegebenenfalls auch das Schiebeschild 20 ausgetauscht werden, die Haltekonsole bleibt bei "normalen Kollisionen" (gemäß EN15227) unversehrt.

## Patentansprüche

1. Schienenfahrzeug, insbesondere für den Eisenbahnverkehr, mit einer Crashausrüstung, wobei das Schienenfahrzeug aus einer Metallkonstruktion besteht, die als Crashausrüstung (3) zumindest am in Fahrtrichtung zeigenden Ende eine Fahrzeugkupplung (4) und energieabsorbierende Elemente aufweist, die an einem Teil des Wagenkastens angeordnet sind, wobei als energieabsorbierende Elemente ein Puffer (5, 6) und eine Crashbox (7, 8) vorgesehen sind, die zeitlich verzögert wirksam werden, die Crashbox (7, 8) mit dem Wagenkasten (1) fest verbunden ist und an ihrer Frontseite der Puffer (5, 6) befestigt ist, der aus einem Stempel (14), einem mit diesem verbundenen reversiblen Hubelement (15) und einem irreversiblen energieabsorbierenden Hubelement (17) besteht, wobei das reversible Hubelement (15) mit dem irreversiblen Hubelement (17) in Berührungskontakt steht, und sich die Crashbox (7, 8) während der Energieaufnahme durch Falt- und Stauchungsvorgänge verformt und nach erfolgter Energieaufnahme die Crashbox (7, 8) zusammen mit dem Puffer (5, 6) eine starre Einheit bildet, die noch vorhandene Längskräfte in den Wagenkasten (1) einleitet, **dadurch gekennzeichnet, dass** die Crashbox (7, 8) als doppelwandiges gehäuseartiges Blechbauteil ausgebildet ist, deren innere Wandung (11), die als Führung und Aufnahme für das irreversible Hubelement (17) ausgeführt ist, und äußere Wandung (24) an örtlich definierten Stellen Bauteilschwächungen (13) und in Längsrichtung verlaufende Abkantungen (25) aufweisen.

2. Schienenfahrzeug nach Anspruch 1, **dadurch gekennzeichnet, dass** die äußere Wandung (24) der Crashbox (7, 8) als Pyramidenstumpf mit einer rechteckigen Grundfläche ausgebildet ist, wobei die Crashbox so angeordnet ist, dass die kleinere Fläche (12) des Pyramidenstumpfes in Fahrtrichtung zeigt.

3. Schienenfahrzeug nach Anspruch 1, **dadurch gekennzeichnet, dass** die äußere Wandung der Crashbox (7, 8) als Kegelstumpf ausgebildet ist.

4. Schienenfahrzeug nach Anspruch 1, **dadurch gekennzeichnet, dass** die äußere Wandung der Crashbox (7, 8) aus zwei, mit ihren kleineren Flächen (12) stirnseitig aneinander angrenzenden Kegel- oder Pyramidenstümpfen (21) besteht, die miteinander in Form einer "Sanduhr" verbunden sind.

5. Schienenfahrzeug nach einem der Ansprüche 1 bis 4, **dadurch gekennzeichnet, dass** die Abkantungen (25) in der äußeren Wandung (24) der Crashbox (7, 8) nach innen und/oder außen zeigen.
**dadurch gekennzeichnet, dass**

6. Schienenfahrzeug nach einem der Ansprüche 1 bis 5, **dadurch gekennzeichnet, dass** bei einer als Pyramidenstumpf ausgebildete äußeren Wandung (24) der Crashbox (7, 8) an den vertikalen Seitenwänden nach außen zeigende Abkantungen (25a) und an den horizontalen Seitenwänden nach innen zeigende Abkantungen (25b) angeordnet sind.

7. Schienenfahrzeug nach einem der Ansprüche 1 bis 6, **dadurch gekennzeichnet, dass** über einen oder mehrere Parameter, wie Material, Materialdicke, Sollbruchstellen, Aussparungen (13) und Triggerungen das Deformationsverhalten der Crashbox (7, 8) einstellbar ist.

8. Schienenfahrzeug nach einem der Ansprüche 1 bis 7, **dadurch gekennzeichnet, dass** die Bauteilschwächungen durch Verringerungen der Materialdicke und/oder Freischnitte (13) gebildet sind.

9. Schienenfahrzeug nach einem der Ansprüche 1 bis 8, **dadurch gekennzeichnet, dass** die Hubelemente (15, 17) des Puffers (5, 6) und die innere Wandung (11) der Crashbox (7, 8) rohrförmig ausgebildet sind.

10. Schienenfahrzeug nach einem der Ansprüche 1 bis 9, **dadurch gekennzeichnet, dass** der Hohlraum zwischen den Wandungen (11, 24) der Crashbox (7, 8) mit einem energieabsorbierenden Schaum ausgefüllt ist.

11. Schienenfahrzeug nach einem der Ansprüche 1 bis 10, **dadurch gekennzeichnet, dass** am Untergestell des Wagenkasten (1) ein Bahnräumer (9) mit Energieabsorber (21) angeordnet ist.

12. Schienenfahrzeug nach Anspruch 11, **dadurch gekennzeichnet, dass** der Bahnräumer (9) aus zwei parallel beabstandeten Haltekonsolen (19), die am Untergestell befestigt sind, dem Energieabsorber (21) und einem Schiebeschild (20) besteht, wobei zwischen dem in Fahrtrichtung zeigenden Ende der Haltekonsolen (19) und dem Schiebeschild (20) jeweils eine Crashbox (7) als Energieabsorber angeordnet ist.

## Claims

1. Rail vehicle with crash equipment, especially for rail traffic, comprising a metal construction which has as crash equipment (3) at the end pointing in the direction of travel at least a vehicle coupling (4) and energy-absorbing elements which are arranged on a part of the vehicle body, wherein a buffer (5, 6) and a crash box (7, 8) are provided as energy-absorbing elements, which are operated in a time-delayed manner, the crash box (7, 8) is permanently connected to the vehicle body (1) with the buffer (5, 6) attached to its front side, said buffer comprising a plunger (14), a reversible lifting element (15) connected to said plunger and an irreversible, energy-absorbing lifting element (17, wherein the reversible lifting element (15) is in contact with the irreversible lifting element (17) and the crashbox (7, 8) is deformed by compression and crumpling processes during the absorption of energy and after the absorption of energy the crashbox (7, 8) together with the buffer (5, 6) forms a rigid unit which conducts the longitudinal forces still present into the vehicle body (1), **characterised in that** the crashbox (7, 8) is constructed as a double-walled, casing-like sheet-metal component, whose inner wall (11), constructed as a guide and housing for the irreversible lifting element (17), and outer wall (24) have structural weaknesses (13) in the components at locally defined places and have angled portions (25) running in a longitudinal direction.

2. Rail vehicle according to claim 1, **characterised in that** the outer wall (24) of the crashbox (7, 8) is formed as a truncated pyramid with a rectangular base area, with the crashbox so arranged that the smaller surface (12) of the truncated pyramid points in the direction of travel.

3. Rail vehicle according to claim 1, **characterised in that** the outer wall of the crashbox (7, 8) is formed as a truncated cone.

4. Rail vehicle according to claim 1, **characterised in that** the outer wall of the crashbox (7, 8) comprises two truncated cones or pyramids (21) with their smaller surfaces (12) adjoining each other frontally, said cones or pyramids being connected together in an hour-glass shape.

5. Rail vehicle according to one of the claims 1 to 4, **characterised in that** the angled portions (25) in the outer wall (24) of the crashbox (7, 8) point inwards or outwards.

6. Rail vehicle according to one of the claims 1 to 5, **characterised in that** angled portions (25a) pointing outwards are arranged on the vertical side walls and that angled portions (25b) pointing inwards are arranged on the horizontal side walls on one outer wall (24) of the crashbox (7, 8) formed as a truncated pyramid.

7. Rail vehicle according to one of the claims 1 to 6, **characterised in that** the deformation behaviour of the crashbox (7, 8) is adjustable via one or more parameters, such as material, material thickness, predetermined breaking points, recesses (13) and triggerings.

8. Rail vehicle according to one of the claims 1 to 7, **characterised in that** the component weaknesses are formed by reducing the thickness of the material and/or by cut-outs (13).

9. Rail vehicle according to one of the claims 1 to 8, **characterised in that** the lifting elements (15, 17) of the buffer (5, 6) and the inner wall (11) of the crashbox (7, 8) are of tubular construction.

10. Rail vehicle according to one of the claims 1 to 9, **characterised in that** the cavity between the walls (11, 24) of the crashbox (7, 8) is filled with an energy-absorbing foam.

11. Rail vehicle according to one of the claims 1 to 10, **characterised in that** a rail guard (9) with an energy absorber (21) is arranged on the underframe of the vehicle body (1).

12. Rail vehicle according to claim 11, **characterised in that** the rail guard (9) comprises two parallel mounting brackets (19), attached to the underframe, the energy absorber (21) and a sliding plate (20), with a crashbox (7) arranged in each case as an energy absorber between the end of the mounting brackets pointing in the direction of travel (19) and the sliding plate (20).

## Revendications

1. Véhicule sur rails, notamment pour le transport ferroviaire, muni d'un équipement anticollision, le véhicule sur rails se composant d'une construction métallique présentant sous forme d'équipement anticollision (3), au moins à l'extrémité tournée dans le sens de la marche, un attelage (4) et des éléments absorbeurs d'énergie disposés sur une partie de la caisse de voiture, un amortisseur (5, 6) et une boîte anticollision (7, 8) à effet temporisateur étant prévus comme éléments absorbeurs d'énergie, la boîte anticollision (7, 8) étant solidaire de la caisse de voiture (1) et l'amortisseur étant fixé sur la face avant de celle-ci, l'amortisseur se composant d'un tampon (14), d'un élément de levage (15) réversible relié à celui-ci et d'un élément de levage (17) irréversible, absorbant l'énergie, l'élément de levage réversible (15) étant en contact avec l'élément de levage (17) irréversible, et la boîte anticollision (7, 8) se déformant pendant l'absorption d'énergie par pliage et par écrasement, et au terme de l'absorption d'énergie la boîte anticollision (7, 8) formant avec l'amortisseur (5, 6) une unité fixe guidant les forces longitudinales encore présentes à l'intérieur de la caisse de voiture (1), **caractérisé en ce que** la boîte anticollision (7, 8) est configurée sous forme d'élément de tôle à double paroi en forme de boîtier dont la paroi interne (11) configurée sous forme de guidage et de logement pour l'élément de levage (17) irréversible, et la paroi externe (24) présentent à des endroits définis géographiquement des atténuations de composants (13) et des pliures (25) s'étendant dans le sens longitudinal.

2. Véhicule sur rails selon la revendication 1, **caractérisé en ce que** la paroi externe (24) de la boîte anticollision (7, 8) est configurée sous forme de pyramide tronquée de base rectangulaire, la boîte anticollision étant disposée de sorte que la surface la plus petite (12) de la pyramide tronquée est dirigée vers le sens de la marche.

3. Véhicule sur rails selon la revendication 1, **caractérisé en ce que** la paroi externe de la boîte anticollision (7, 8) est configurée sous forme de cône tronqué.

4. Véhicule sur rails selon la revendication 1, **caractérisé en ce que** la paroi externe de la boîte anticollision (7, 8) se compose de deux pyramides ou cônes tronqués (21) adjacents l'un à l'autre à l'avant avec leurs plus petites surfaces (12) qui sont reliés ensemble sous forme de « sablier ».

5. Véhicule sur rails selon l'une des revendications 1 à 4, **caractérisé en ce que** les pliures (25) de la paroi externe (24) de la boîte anticollision (7, 8) sont dirigées vers l'intérieur et/ou vers l'extérieur.

6. Véhicule sur rails selon l'une des revendications 1 à 5, **caractérisé en ce qu'**en cas de paroi externe (24) de la boîte anticollision (7, 8) configurée sous forme de pyramide tronquée, des pliures (25a) tournées vers l'extérieur sont disposées sur les parois latérales verticales et des pliures (25b) tournées vers l'intérieur sont disposées sur les parois latérales horizontales.

7. Véhicule sur rails selon l'une des revendications 1 à 6, **caractérisé en ce que** le comportement à la déformation de la boîte anticollision (7, 8) peut être réglé par l'intermédiaire d'un ou de plusieurs paramètres tels que le matériau, l'épaisseur du matériau, les points de rupture théoriques, les évidements (13) et l'apport ciblé d'entailles.

8. Véhicule sur rails selon l'une des revendications 1 à 7, **caractérisé en ce que** les atténuations de composants sont formées par réduction de l'épaisseur du matériau et/ou par des découpes (13).

9. Véhicule sur rails selon l'une des revendications 1 à 8, **caractérisé en ce que** les éléments de levage (15, 17) de l'amortisseur (5, 6) et la paroi interne (11) de la boîte anticollision (7, 8) présentent une configuration cylindrique.

10. Véhicule sur rails selon l'une des revendications 1 à 9, **caractérisé en ce que** l'espace creux situé entre les parois (11, 24) de la boîte anticollision (7, 8) est rempli de mousse absorbant l'énergie.

11. Véhicule sur rails selon l'une des revendications 1 à 10, **caractérisé en ce qu'**un chasse-pierres (9) muni d'un absorbeur d'énergie (21) est disposé sur le châssis de la caisse de voiture (1).

12. Véhicule sur rails selon la revendication 11, **caractérisé en ce que** le chasse-pierres (9) se compose de deux consoles de maintien (19) écartées parallèlement l'une de l'autre et fixées sur le châssis, d'un absorbeur d'énergie (21), d'une lame (20), une boîte anticollision (7) étant à chaque fois disposée sous forme d'absorbeur d'énergie entre l'extrémité dirigée dans le sens de la marche des consoles de maintien (19) et de la lame (20).
